Europäisches Patentamt

(19) European Patent Office

Office européen des brevets

(11) **EP 1 147 671 B1**

(12) **EUROPEAN PATENT SPECIFICATION**

(45) Date of publication and mention
of the grant of the patent:
**21.04.2004 Bulletin 2004/17**

(21) Application number: **99968966.4**

(22) Date of filing: **21.12.1999**

(51) Int Cl.⁷: $H04N\ 7/36$, $H04N\ 7/26$

(86) International application number:
**PCT/US1999/031004**

(87) International publication number:
**WO 2000/041394 (13.07.2000 Gazette 2000/28)**

(54) **METHOD AND APPARATUS FOR PERFORMING MOTION COMPENSATION IN A TEXTURE MAPPING ENGINE**

VERFAHREN UND VORRICHTUNG ZUR BEWEGUNGSKOMPENSATION IN EINEM TEXTURABBILDUNGSSYSTEM

PROCEDE ET DISPOSITIF POUR LA COMPENSATION DU MOUVEMENT DANS UN MOTEUR DE MAPPAGE DE TEXTURE

(84) Designated Contracting States:
**DE FR GB**

(30) Priority: **07.01.1999 US 227174**

(43) Date of publication of application:
**24.10.2001 Bulletin 2001/43**

(73) Proprietor: **INTEL CORPORATION**
**Santa Clara, CA 95052 (US)**

(72) Inventors:
• **PIAZZA, Thomas, A.**
**Granite Bay, CA 95746 (US)**
• **COOK, Val, G.**
**Shingle Springs, CA 95682 (US)**

(74) Representative: **Molyneaux, Martyn William et al**
**Harrison Goddard Foote**
**40-43 Chancery Lane**
**London WC2A 1JA (GB)**

(56) References cited:
**US-A- 5 892 518**

• **PATENT ABSTRACTS OF JAPAN vol. 1997, no. 08, 29 August 1997 (1997-08-29) & JP 09 102047 A (MATSUSHITA ELECTRIC IND CO LTD), 15 April 1997 (1997-04-15)**
• **FUJISHIMA H ET AL: "Hybrid media-processor core for natural and synthetic video decoding" ISCAS'99. PROCEEDINGS OF THE 1999 IEEE INTERNATIONAL SYMPOSIUM ON CIRCUITS AND SYSTEMS VLSI (CAT. NO.99CH36349), ISCAS'99. PROCEEDINGS OF THE 1999 IEEE INTERNATIONAL SYMPOSIUM ON CIRCUITS AND SYSTEMS. VLSI, ORLANDO, FL, USA, 30 MAY-2 JUNE 1999, pages 275-278 vol.4, XP002139548 1999, Piscataway, NJ, USA, IEEE, USA ISBN: 0-7803-5471-0**
• **OSTERMANN J ET AL: "Natural and synthetic video in MPEG-4" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, pages 3805-3808 vol.6, XP002139549 1998, New York, NY, USA, IEEE, USA ISBN: 0-7803-4428-6**

**Description**

FIELD OF THE INVENTION

The invention relates to graphics display by electronic devices. More particularly, the invention relates to motion compensation of graphics that are displayed by electronic devices.

BACKGROUND OF THE INVENTION

Several standards currently exist for communication of digital audio and/or video data. For example, the Motion Picture Experts Group (MPEG) has developed several standards for use with audio-video data (e.g., MPEG-1, MPEG-2, MPEG-4). In order to improve data communications audio-video data standards often include.compression schemes. In particular, MPEG-2 provides use of a motion vector as part of a digital video compression scheme.

In general, motion vectors are used to reduce the amount of data required to communicate full motion video by utilizing redundancy between video frames. The difference between frames can be communicated rather than the consecutive full frames having redundant data. Typically, motion vectors are determined for 16x 16 pixel (pel) sets of data referred to as a "macroblock."

Digital encoding using motion compensation uses a search window or other reference that is larger than a macroblock to generate a motion vector pointing to a macroblock that best matches the current macroblock. The search window is typically larger than the current macroblock. The resulting motion vector is encoded with data describing the macroblock.

Decoding of video data is typically accomplished with a combination of hardware and software. Motion compensation is typically decoded with dedicated motion compensation circuitry that operates on a buffer of video data representing a macroblock. However, this scheme results in the motion compensation circuitry being idle when a video frame is processed by a texture mapping engine and the texture mapping engine is idle when the video frame is processed by the motion compensation circuitry. This sequential decoding of video data results in inefficient use of decoding resources. Patent Abstracts of Japan, volume 97, number 08, 29 August, (1997-08-29) and JP09 102047A, 15 April, 1997 (1997-04-15) discloses a picture generating device used for movement compensation processing in which reference picture data and differential picture data are calculated with the result being written into the generated picture. What is needed is an improved motion compensation decoding scheme.

SUMMARY OF THE INVENTION

According to a first aspect of this invention there is provided a method as claimed in claim 1 herein.

According to a second aspect of this invention there is provided a circuit as claimed in claim 6 herein.

A method and apparatus for motion compensation of graphics with a texture mapping engine is described. A command having motion compensation data related to a macroblock is received. Decoding operations for the macroblock that generate correction data arc performed. The correction data is stored in a texture palette in a first order that corresponds to an output of the decoding operations. Frame prediction operations are performed in response to the command. The correction data is read from the texture palette in a second order. The correction data is combined with results from the frame prediction operations to generate an output video frame.

BRIEF DESCRIPTION OF THE DRAWINGS

The invention is illustrated by way of example, and not by way of limitation in the figures of the accompanying drawings in which like reference numerals refer to similar elements.

**Figure 1** is a system suitable for use with the invention.
**Figure 2** is a block diagram of an MPEG-2 decoding process suitable for use with the invention.
**Figure 3** is a typical timeline of frame delivery and display of MPEG-2 frames.
**Figure 4** illustrates three MPEG-2 frames.
**Figure 5** illustrates a conceptual representation of pixel data suitable for use with the invention.
**Figure 6** is a block diagram of components for performing motion compensation and texture mapping according to one embodiment of the invention.
**Figure 7** illustrates luminance correction data for a 16 pixel by 16 pixel macroblock.
**Figure 8** is a block diagram of a hardware-software interface for motion compensation decoding according to one embodiment of the invention.

DETAILED DESCRIPTION

A method and apparatus for motion compensation of graphics with a texture mapping engine is described. In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

In general, the invention provides motion compensation by reconstructing a picture by predicting pixel colors from one or more reference pictures. The prediction can be forward, backward or bi-directional. The architecture described herein provides for reuse of texture mapping hardware components to accomplish motion compensation of digital video data. Bounding boxes and edge tests are modified such that complete macroblocks are processed for motion compensation. In addition, pixel data is written into a texture palette according to a first order based on Inverse Discrete Cosine Transform (IDCT) results and read out according to a second order optimized for locality of reference. A texture palette memory management scheme is provided to maintain current data and avoid overwriting of valid data when motion compensation commands are pipelined.

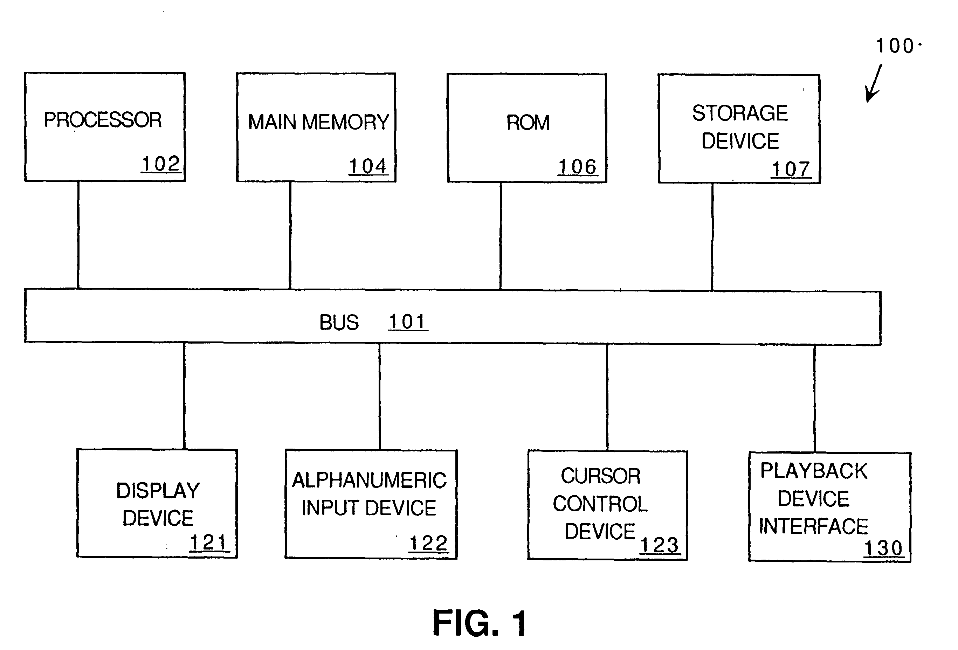

**Figure 1** is one embodiment of a system suitable for use with the invention. System 100 includes bus 101 or other communication device for communicating information and processor 102 coupled to bus 101 for processing information. System 100 further includes random access memory (RAM) or other dynamic storage device 104 (referred to as main memory), coupled to bus 101 for storing information and instructions to be executed by processor 102. Main memory 104 also can be used for storing temporary variables or other intermediate information during execution of instructions by processor 102. System 100 also includes read only memory (ROM) and/or other static storage device 106 coupled to bus 101 for storing static information and instructions for processor 102. Data storage device 107 is coupled to bus 101 for storing information and instructions.

Data storage device 107 such as a magnetic disk or optical disc and corresponding drive can be coupled to system 100. System 100 can also be coupled via bus 101 to display device 121, such as a cathode ray tube (CRT) or liquid crystal display (LCD), for displaying information to a computer user as well as supporting circuitry. Digital video decoding and processing circuitry is described in greater detail below. Alphanumeric input device 122, including alphanumeric and other keys, is typically coupled to bus 101 for communicating information and command selections to processor 102. Another type of user input device is cursor control 123, such as a mouse, a trackball, or cursor direction keys for communicating direction information and command selections to processor 102 and for controlling cursor movement on display 121.

Network interface 130 provides an interface between system 100 and a network (not shown in Figure 1). Network interface 130 can be used, for example, to provide access to a local area network, or to the Internet. Network interface 130 can be used to receive digital video data from a remote source for display by display device 121.

One embodiment of the present invention is related to the use of system 100 to perform motion compensation in a graphics texture mapping engine. According to one embodiment, motion compensation is performed by system 100 in response to processor 102 executing sequences of instructions contained in main memory 104.

Instructions are provided to main memory 104 from a storage device, such as magnetic disk, a read-only memory (ROM) integrated circuit (IC), CD-ROM, DVD, via a remote connection (e.g., over a network), etc. In alternative embodiments, hard-wired circuitry can be used in place of or in combination with software instructions to implement the present invention. Thus, the present invention is not limited to any specific combination of hardware circuitry and software instructions.

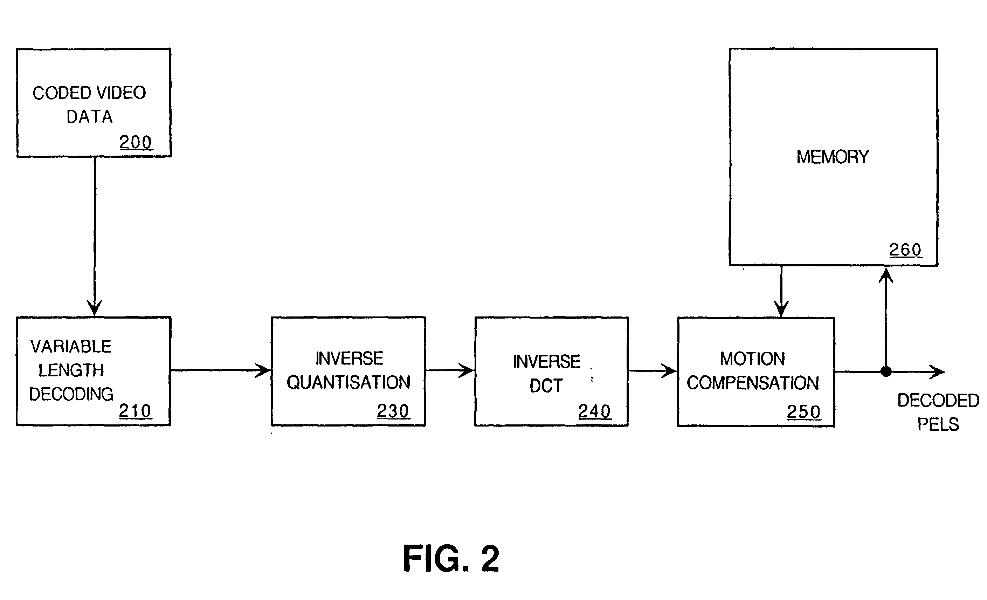

**Figure 2** is a block diagram of an MPEG-2 decoding process suitable for use with the invention. Decoded video data is obtained. Decoded video data can come from either a local (e.g., memory, DVD, CD-ROM) or a remote (e.g., Web server, video conferencing system) source.

In one embodiment, coded video data 200 is encoded using variable length codes. In such an embodiment, an input bit stream is decoded and converted into a two-dimensional array via variable length decoding 210. Variable length decoding 210 operates to identify instructions in the input stream having variable lengths because of, for example, varying amounts of data, varying instruction sized, etc.

The output of variable length decoding 210 provides input to inverse quantization 230, which generates a set of Discrete Cosine Transform (DCT) coefficients. The two-dimensional array of DCT coefficients is processed via inverse DCT (IDCT) 240, which generates a two-dimensional array of correction data values. The correction data values include motion vectors for video data. In one embodiment the correction data values include luminance and chrominance as well as motion vectors.

Correction data values from IDCT 240 are input to motion compensation block 250, which results in decoded pels. The decoded pels and the correction data values are used to access pixel value data stored in memory 260. Memory 260 stores predicted pixels and reference pixels.

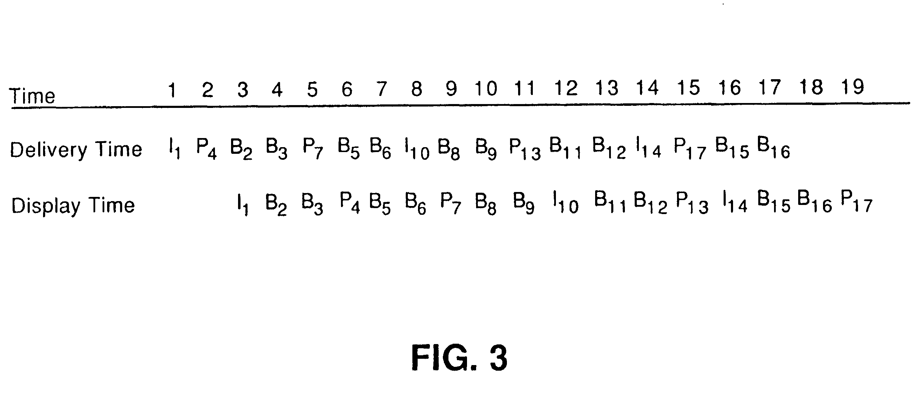

**Figure 3** is a typical timeline of frame delivery and display of MPEG-2 frames. Frames within a video stream can be decoded in a different order than display order. In addition frames can be delivered in a different order than shown in Figure 3. Ordering of frame delivery can be chosen based on several factors as is well known in the art.

Video frames are categorized as Intra-coded (I), Predictive-coded (P), Bi-directionally predictive-coded (B). Intra-coded frames are frames that are not reconstructed from other frames. In other words, the compete frame is communicated rather than differences between previous and/or subsequent frames.

Bi-directionally predictive coded frames are interpolated from both a preceding and a subsequent frame based on differences between the frames. B frames can also be predicted from forward or backward reference frames. Predictive coded frames are interpolated from a forward reference picture. Use of I, P and B frames is known in the art and not described in further detail except as it pertains to the invention. The subscripts in Figure 3 refer to the original ordering of frames as received by an encoder. Use of I, P and B frames with the invention is described in greater detail below.

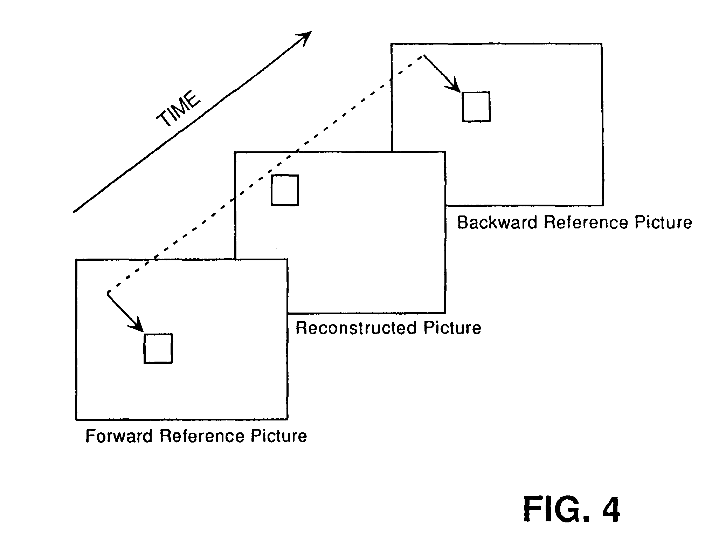

**Figure 4** illustrates three MPEG-2 frames. The reconstructed picture is a currently displayed B or P frame. The forward reference picture is a frame that is backwards in time as compared to the reconstructed picture. The backward reference picture is a frame that is forward in time as compared to the reconstructed picture.

Frames are either reconstructed with either a "Frame Picture Structure" or a "Field Picture Structure." A frame picture contains every scan line of the image, while a field picture contains only alternate scan lines. The "Top field" contains the even numbered scan lines and the "Bottom field" contains odd numbered scan lines. Frame picture structures and field picture structures as related to motion vectors are described in greater detail below. In one embodiment, the Top field and the Bottom field are stored in memory in an interleaved manner. Alternatively, the Top and Bottom fields can be stored independently of each other.

In general, motion compensation consists of reconstruction a picture by predicting, either forward, backward or bi-directionally, the resulting pixel colors from one or more reference pictures. Figure 4 illustrates two reference pictures and a bi-directionally predicted reconstructed picture. In one embodiment, the pictures are divided into 16 pixel by 16 pixel macroblocks; however, other macroblock sizes (e.g., 16x8, 8x8) can also be used. A macroblock is further divided into 8 pixel by 8 pixel blocks.

In one embodiment, motion vectors originate at the upper left comer of a current macroblock and point to an offset location where the most closely matching reference pixels are located. Motion vectors can originate from other locations within a macroblock and can be used for smaller portions of a macroblock. The pixels at the locations indicated by the motion vectors are used to predict the reconstructed picture.

In one embodiment, each pixel in the reconstructed picture is bilinearly filtered based on pixels in the reference picture(s). The filtered color from the reference picture(s) is interpolated to form a new color. A correction term based on the IDCT output can be added to further refine the prediction of the resulting pixels.

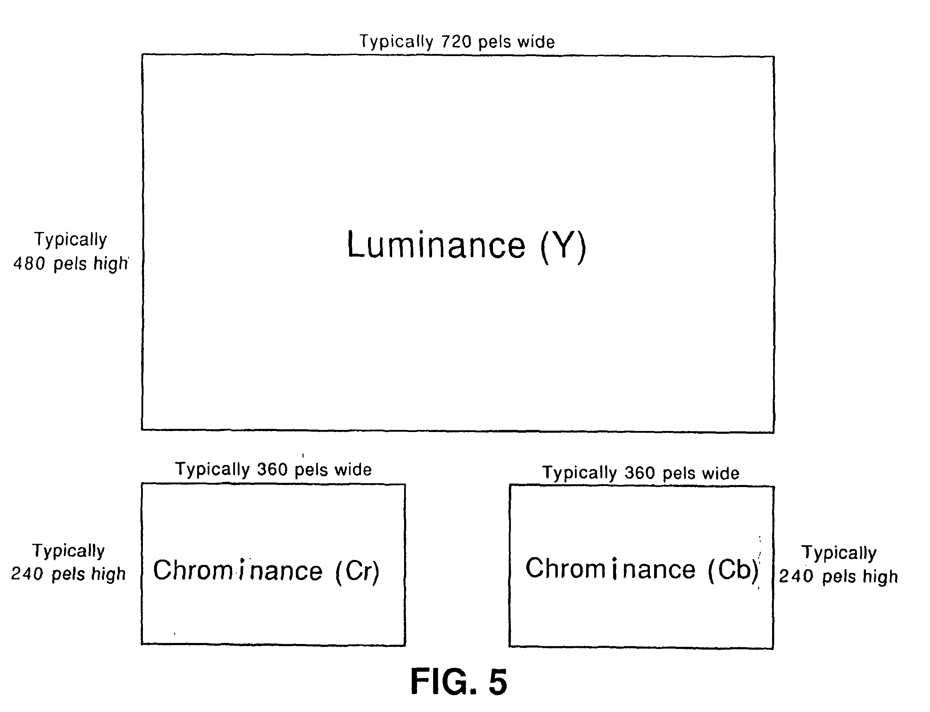

**Figure 5** illustrates a conceptual representation of pixel data-suitable for use with the invention. Each macroblock has 256 bytes of luminance (Y) data for the 256 pixels of the macroblock. The blue chromance (U) and red chromance (V) data for the pixels of the macroblock are communicated at ¼ resolution, or 64 bytes of U data and 64 byes of V data for the macroblock and filtering is used to blend pixel colors. Other pixel encoding schemes can also be used.

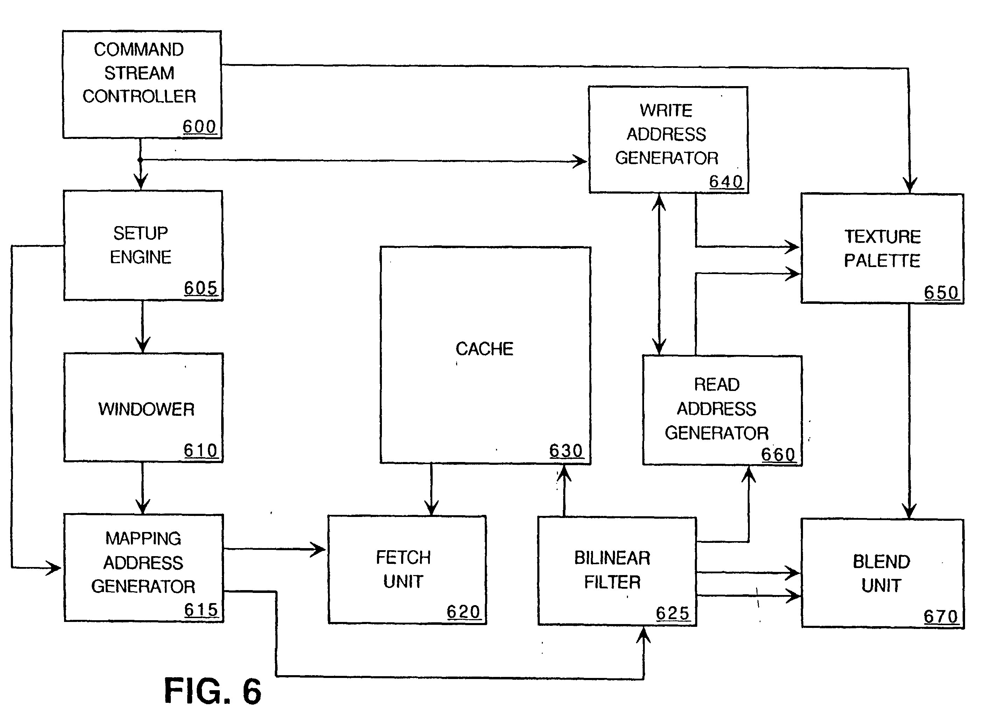

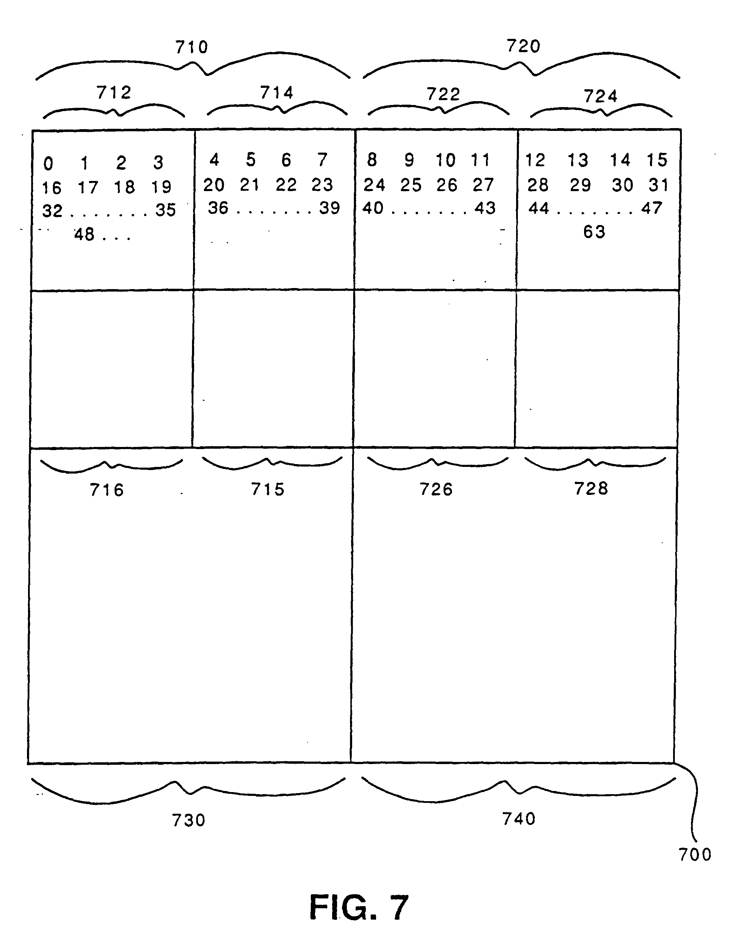

**Figure 6** is a block diagram of components for performing motion compensation and texture mapping according to one embodiment of the invention. The components of Figure 6 can be used to perform both texture mapping and motion compensation. In one embodiment, motion compensation decoding is performed in response to a particular command referred to herein as the GFXBLOCK command; however, other command names and formats can also be used. One format for the GFXBLOCK command is described in greater detail below with respect to Figure 7.

Command stream controller 600 is coupled to receive commands from an external source, for example, a processor or a buffer. Command stream controller 600 parses and decodes the commands to perform appropriate control functions. If the command received is not a GFXBLOCK command, command stream controller 600 passes control signals and data to setup engine 605. Command stream controller 600 also controls memory management, state variable management, two-dimensional operations, etc. for non-GFXBLOCK commands.

In one embodiment, when command stream controller receives a GFXBLOCK command, correction data is forwarded to and stored in texture palette 650; however, correction data can be stored in any memory. Command stream controller 600 also sends control information to write address generator 640. The control information sent to write address generator 640 includes block pattern bits, prediction type (e.g., I, B or P), etc. Write address generator 640 causes the correction data for pixels of a macroblock to be written into texture palette in an order as output by an IDCT operation for the macroblock. In one embodiment the IDCT operation is performed in software; however, a hardware implementation can also be used.

**Figure 7** illustrates luminance correction data for a 16 pixel by 16 pixel macroblock. Generally, macroblock 700 includes four 8 pixel by 8 pixel blocks labeled 710, 720, 730 and 740. Each block includes four 4 pixel by 4 pixel sub-blocks. For example, block 710 includes sub-blocks 712,714,716 and 718 and block 720 includes sub-blocks 722, 724, 726 and 728.

Write address generator 640 causes correction data for the pixels of a macroblock to be written to texture palatte 650 block by block in row major order. In other words, the first row of block 710 (pixels 0-7) is written to texture palette 650 followed by the second row of block 710 (pixels 16-23). The remaining rows of block 7 10 are written to texture palette 650 in a similar manner.

After the data from block 710 is written to texture palette 650, data from block 720 is written to texture palette 650 in a similar manner. Thus, the first row of block 720 (pixels 8-15) are written to texture palette 650 followed by the second row of block 720 (pixels 24-31). The remaining rows of block 720 are written to texture palette 650 in a similar manner. Blocks 730 and 740 are written to texture palette 650 in a similar manner.

Referring back to Figure 6, command stream controller 600 also sends control information to setup engine 605. In one embodiment, command stream controller 600 provides setup engine 605 with co-ordinates for the origin of the macroblock corresponding to the GFXBLOCK command being processed. For example, the co-ordinates (0,0) are provided for the top left macroblock of a frame, or the co-ordinates (0,16) are provided for the second macroblock of the top row of a frame.

Command stream controller 600 also provides setup engine 605 with height and width information related to the macroblock. From the information provided, setup engine 605 determines a bounding box that is contained within a predetermined triangle in the macroblock. In contrast, when texture mapping is being performed, setup engine 605 determines a bounding box that contains the triangle. Thus, when motion compensation is being performed, the entire macroblock is iterated rather than only the triangle.

In one embodiment, the bonding box is defined by the upper left and lower right comers of the bounding box. The upper left of the bounding box is the origin of the macroblock included in the GFXBLOCK command. The lower right comer of the bounding box is computer by adding the region height and width to the origin.

In one embodiment, the bounding box computes a texture address offset, $P_0$, which is determined according to:

$$P_{0u} = Origin_x + MV_x \qquad \text{(Equation 1)}$$

and

$$P_{0v} = Origin_y + MV_y \qquad \text{(Equation 2)}$$

where $P_{0v}$ and $P_{0u}$ are offsets for $v$ and $u$ co-ordinates, respectively. $Origin_x$ and $Origin_y$ are the $x$ and $y$ co-ordinates of the bounding box origin, respectively, and $MV_x$ and $MV_y$ are the $x$ and $y$ components of the motion vector, respectively. The $P_0$ term translates the texture addresses in a linear fashion.

In one embodiment $P_{0v}$ and $P_{0u}$ are computed vectorially by summing the motion vectors with the region origin according to:

$$u(x,y) = \frac{C_{xS} \cdot x + C_{yX} \cdot y + C_{0S}}{C_{xiW} \cdot x + C_{yiW} \cdot C_{0iW}} + P_{0u} \qquad \text{(Equation 3)}$$

and

$$v(x,y) = \frac{C_{xT} \cdot x + C_{yT} \cdot y + C_{0T}}{C_{xiW} \cdot x + C_{yiW} \cdot y + C_{0iW}} + P_{0v} \qquad \text{(Equation 4)}$$

where the variables in Equations 3 and 4 are as described below. In one embodiment, the values below are used for GFXBLOCK commands. For non-GFXBLOCK commands the values are calculated by setup engine 605. By using the values below, complex texture mapping equations can be simplified for use for motion compensation calculations, thereby allowing hardware to be used for both purposes.

| Variable | Description | Value |
|---|---|---|
| $C_{xS}$ | Rate of change of S with respect to x | 1.0 |
| $C_{OS}$ | Offset to S | 0.0 |
| $C_{yS}$ | Rate of change of S with respect to y | 0.0 |
| $C_{xT}$ | Rate of change of T with respect to x | 0.0 |
| $C_{OS}$ | Offset to T | 0.0 |
| $C_{yT}$ | Rate of change of T with respect to y | 1.0 |
| $C_{xiW}$ | Rate of change of 1/W with respect to x | 0.0 |
| $C_{OiW}$ | Offset to 1/W | 1.0 |
| $C_{yiW}$ | Rate of change of 1/W with respect to y | 0.0 |

The *u,v* texture addresses are used to determine which pixels are fetched from reference pixels.

Mapping address generator 615 provides read addresses to fetch unit 620. The read address generated by mapping address generator 615 and provided to fetch unit 620 are based on pixel movement between frames as described by the motion vector. This allows pixels stored in memory to be reused for a subsequent frame by rearranging the addresses of the pixels fetched. In one embodiment, the addresses generated by mapping address generator 615 using the values listed above simplify to:

$$v(x,y) = y + P_{0r} \qquad \text{(Equation 5)}$$

and

$$u(x,y) = x + P_{0u} \qquad \text{(Equation 6)}$$

Setup engine 605 provides the bounding box information to windower 610. Windower 610 iterates the pixels within the bounding box to generate write address for data written by the GFXBLOCK command. In other words, the triangle edge equations are always parsed, which allows windower 610 to process the entire macroblock rather than stopping at a triangle boundary.

Windower 610 generates pixel write addresses to write data to a cache memory not shown in Figure 6. Windower 610 also provides mapping address generator 615 with the origin of the macroblock and motion vector information is provided to mapping address generator 615. In one embodiment, windower 610 provides a steering command and a pixel mask to mapping address generator 615, which determines reference pixel locations based on the information provided by windower 610 and setup engine 605.

Fetch unit 620 converts the read addresses provided by mapping address generator 615 to cache addresses. The cache addresses generated by fetch unit 620 are sent to cache 630. The pixel data stored at the cache address is sent to bilinear filter 625. Mapping address generator 615 sends fractional-pixel positioning data and cache addresses for neighboring pixels to bilinear filter 615. If the motion vector defines a movement that is less than a full pixel, bilinear filter 625 filters the pixel data returned from cache 630 based on the fractional position data and the neighboring pixels. Bilinear filtering techniques are well known in the art and not discussed further herein.

In one embodiment, bilinear filter 625 generates both forward and backward filtered pixel information that is sent to blend unit 670. This information can be sent to blend unit 670 using separate channels as shown in Figure 6, or the information can be time multiplexed over a single channel. Bilinear filter 625 sends pixel location information to read address generator 660. The pixel location information is positioning and filtering as described above.

Read address generator 660 causes pixel information to be read from texture palette 650 in an order different than written as controlled by write address generator 640. Referring to Figure 7, read address generator 660 causes pixel data to be read from texture palette 650 sub-block-by-sub-block in row major order. This ordering optimizes performance of cache 630 due to locality of reference of pixels stored therein. In other words, the first row of sub-block 712 (pixels 0-3) are read followed by the second row of sub-block 712 (pixels 16-19). The remaining pixels of sub-block 712 are read in a similar manner.

After the pixels of sub-block 712 are read the pixels of sub-block 714 are read in a similar manner. The first row of sub-block 714 (pixels 4-7) are read followed by the second row of sub-block 714 (pixels 20-23). The remaining sub-blocks of block 710 (716 and 718) are read in a similar manner. The sub-blocks of block 720 are read in a similar manner followed by the sub-blocks of block 730 and finally by the sub-blocks of block 740.

The pixels read from texture palette 650 are input to blend unit 670. Blend unit 670 combines the pixel data from bilinear filter 625 with correction data from texture palette to generate an output pixel for a new video frame. Mapping address generator 615 provides fractional pixel positioning information to bilinear filter 625.

Multiple GFXBLOCK commands can exist in the pipeline of Figure 6 simultaneously. As a result correction data steams through texture palette 650. Read and write accesses to texture palette 650 are managed such that the correction data streams do not overwrite valid data stored in the texture palette 650.

In one embodiment, a FIFO buffer (not shown in Figure 6) is provided between mapping address generator 615 and bilinear filter 625..Because memory accesses are slower than other hardware operations, accesses to memory storing reference pixels can stall pipelined operations. The FIFO buffer allows memory latency to be hidden, which allows the pipeline to function without waiting for reference pixels to be returned from the memory, thereby improving pipeline performance.

In order to concurrently hide memory latency and store correction data in texture palette 650 for subsequent GFXBLOCK commands, write address generator 640 is prevented from overwriting valid data in texture palette 650. In one embodiment, read address generator 660 communicates synch points to write address generator 640. The synch points correspond to addresses beyond which read access generator 660 will not access. Similarly, write address generator 640 communicates synch points to read address generator 660 to indicate valid data.

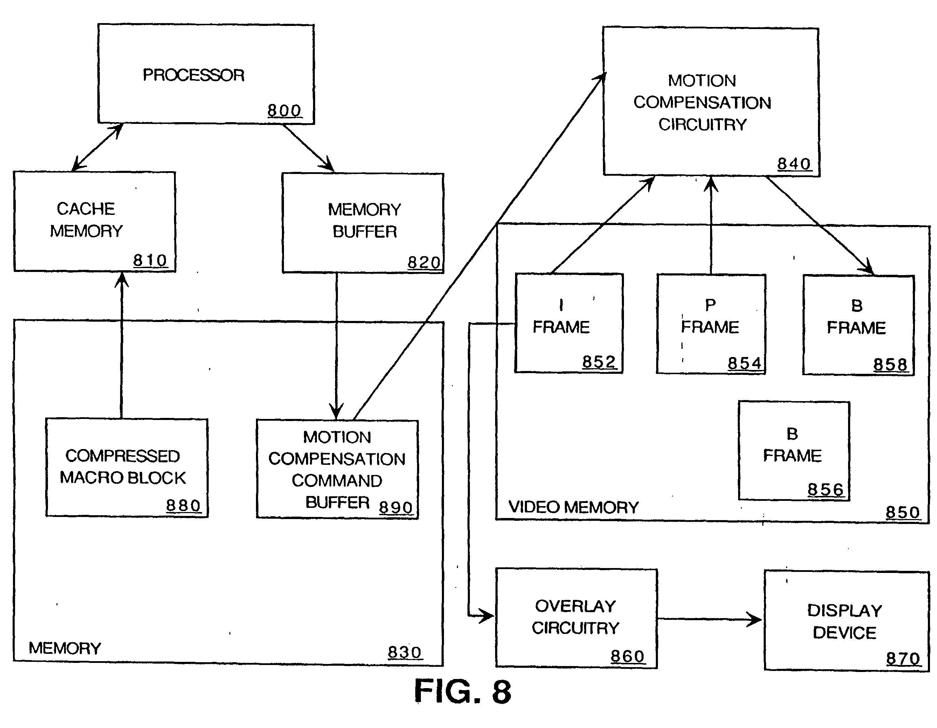

**Figure 8** is a block diagram of a hardware-software interface for motion compensation decoding according to one embodiment of the invention. The block diagram of Figure 8 corresponds to a time at which the motion compensation circuitry is rendering a B frame and an I frame is being displayed. Certain input and/or output frames may differ as a video stream is processed.

Compressed macroblock 880 is stored in memory 830. In one embodiment, memory 830 is included within a computer system, or other electronic device. Compressed macroblock 880 can also be obtained from sources such as, for example, a CD-ROM, DVD player, etc.

In one embodiment, compressed macroblock 880 is stored in cache memory 810. Storing compressed macroblock 880 in cache memory 810 gives processor 800 faster access to the data in compressed macroblock 880. In alternative embodiments, compressed macroblock 880 is accessed by processor 800 in memory 830.

Processor 800 processes macroblock data stored in cache memory 810 to parse and interpret macroblock commands. In one embodiment, processor 800 also executes a sequence of instructions to perform one or more IDCT operations on macroblock data stored in cache memory 810. Processor 800 stores the results of the IDCT operations and command data in memory buffer 820. Memory buffer 820 stages data to be stored in memory 830.

Data from memory buffer 820 is stored in motion compensation command buffer 890. In one embodiment, motion compensation command buffer 890 is a FIFO queue that stores motion compensation commands, such as the GFXBLOCK command prior to processing by motion compensation circuitry 840. Motion compensation circuitry 840 operates on motion compensation commands as described above with respect to Figure 6.

In the example of Figure 8, motion compensation circuitry 840 reconstructs B frame 858 from I frame 852 and P frame 854. In one embodiment, the various frames are stored in video memory 850. Alternatively, the frames can be stored in memory 830 or some other memory. If, for example, motion compensation circuitry 840 were rendering a B frame a single frame would be read from video memory 850 for reconstruction purposes. In the example of Figure 8, four frames are stored in video memory 850; however, any number of frames can be stored in video memory 850.

The frame being displayed (I frame 852) is read from video memory 850 by overlay circuitry 860. Overlay circuitry 860 converts YUV encoded frames to red-green-blue (RGB) encoded frames so that the frames can be displayed by display device 870. Overlay circuitry 860 can convert the displayed frames to other formats if necessary.

In the foregoing specification, the invention has been described with reference to specific embodiments thereof. It will, however, be evident that various modifications and changes can be made thereto without departing from the broader scope of the invention. The specification and drawings are, accordingly, to be regarded in an illustrative rather than a restrictive sense.

**Claims**

1. A method of motion compensation of digital video data including receiving a motion compensation command having associated correction data related to a macroblock, performing frame prediction operations in response to the motion compensation command, and combining the correction data with results from the frame prediction operations to generate an output video frame, the method **characterized by**:

storing the correction data in a memory (650) in a first order in response to the motion compensation command; and

reading (660) the correction data from the memory (650) in a second order.

**2.** The method of claim 1 the first order is based on output from an Inverse Discrete Cosine Transform (IDCT) operation.

**3.** The method of claim 1 performing frame prediction operations further comprises:

generating a bounding box containing the macroblock (605); and
iterating the bounding box (610);
fetching reference pixels (620);
filtering the reference pixels (625); and
adding correction data to the reference pixels (670).

**4.** The method of claim 1 wherein the motion correction data includes at least one motion vector.

**5.** The method of claim 1 further comprising performing texturing operations for the macroblock.

**6.** A circuit for generating motion compensated video having a command stream controller (600) coupled to receive an instruction to manipulate motion compensated video data, a write address generator (640) coupled to the command stream controller, processing circuitry coupled to the write address generator (640) to receive control information and data from the command stream controller (600) to generate a reconstructed video frame, the circuit **characterized by**:

a memory (650) coupled to the command stream controller (600) and to the write address generator (640), the memory (650) to store pixel data in a first order determined by the write address generator (640); and
a read address generator (660) coupled to the processing circuitry and to the memory (650), the read address generator (660) to cause the memory (650) to output pixel data in a second order.

**7.** The circuit of claim 6 wherein the first order is block-by-block row major order.

**8.** The circuit of claim 6 wherein the first order corresponds to an output sequence of an inverse discrete cosine transform operation.

**9.** The circuit of claim 6 wherein the second order is sub-block-by-sub-block row major order.

**10.** The circuit of claim 6 wherein the processing circuitry includes a set-up engine (605) that determines a bounding box for pixels manipulated by the instruction, wherein the bounding box contains all edges of a macroblock.

**11.** The circuit of claim 6 wherein the processing circuitry includes a windower (610) having a first mode wherein pixels inside a triangle within a bounding box are processed, and a second mode wherein all pixels within the bounding box are processed.

**Patentansprüche**

**1.** Verfahren zur Bewegtbildkompensation digitaler Videodaten, wobei das Verfahren folgendes umfasst: das Empfangen eines Bewegtbildkompensationsbefehls mit zugeordneten Korrekturdaten in Bezug auf einen Makroblock; das Durchführen von Frame-Prädiktionsoperationen als Reaktion auf den Bewegtbildkompensationsbefehl; und Verknüpfen der Korrekturdaten mit Ergebnissen der Frame-Prädiktionsoperationen zum Erzeugen eines Ausgangs-Videoframes, wobei das Verfahren **gekennzeichnet ist durch**:

Speichern der Korrekturdaten in einem Speicher (650) in einer ersten Reihenfolge als Reaktion auf den Bewegtbildkompensationsbefehl; und
Lesen (660) der Korrekturdaten aus dem Speicher (650) in einer zweiten Reihenfolge.

**2.** Verfahren nach Anspruch 1, wobei die erste Reihenfolge auf der Ausgabe einer Inverse Discrete Cosine Transformation (IDCT) Operation basiert.

**3.** Verfahren nach Anspruch 1, wobei das Durchführen von Frame-Prädiktionsoperationen ferner folgendes umfasst:

Erzeugen einer Bounding-Box, die den Makroblock (605) aufweist; und
Iterieren der Bounding-Box (610);
Abrufen von Referenzpixeln (625); und
Addieren von Korrekturdaten zu den Referenzpixeln (670).

**4.** Verfahren nach Anspruch 1, wobei die Bewegtbildkorrekturdaten mindestens einen Bewegungsvektor aufweisen.

**5.** Verfahren nach Anspruch 15, wobei das Verfahren ferner das Durchführen von Texturierungsoperationen für den Makroblock umfasst.

**6.** Schaltung zum Erzeugen von Video mit kompensiertem Bewegtbild mit einer Befehlsstrom-Steuereinheit (600), die so gekoppelt ist, dass sie einen Befehl zur Manipulation der Videodaten mit Bewegtbildkompensation empfängt, mit einem Schreibadressgenerator (640), der mit der Befehlsstrom-Steuereinheit gekoppelt ist, mit einer Verarbeitungsschaltkreisanordnung, die mit dem Schreibadressgenerator (640) gekoppelt ist, um Steuerinformationen und Daten von der Befehlsstrom-Steuereinheit (600) zu empfangen, um einen rekonstruierten Videoframe zu erzeugen, wobei die Schaltung **gekennzeichnet ist durch**:

einen Speicher (650), der mit der Befehlsstrom-Steuereinheit (600) und dem Schreibadressgenerator (640) gekoppelt ist, wobei der Speicher (650) dazu dient, Pixeldaten in einer ersten **durch** den Schreibadressgenerator (640) bestimmten Reihenfolge zu speichern; und
einen Leseadressgenerator (660), der mit der Verarbeitungsschaltkreisanordnung und mit dem Speicher (650) gekoppelt ist, wobei der Leseadressgenerator (660) bewirkt, dass der Speicher (650) Pixeldaten in einer zweiten Reihenfolge ausgibt.

**7.** Schaltung nach Anspruch 6, wobei es sich bei der ersten Reihenfolge um eine blockweise Zeilenhauptreihenfolge handelt.

**8.** Schaltung nach Anspruch 6, wobei die erste Reihenfolge einer Ausgabesequenz einer Inverse Discrete Cosine Transform Operation entspricht.

**9.** Schaltung nach Anspruch 6, wobei es sich bei der zweiten Reihenfolge um eine untergeordnete blockweise Zeilenhauptreihenfolge handelt.

**10.** Schaltung nach Anspruch 6, wobei die Verarbeitungsschaltkreisanordnung eine Setup-Engine (605) . aufweist, die eine Bounding-Box für durch den Befehl manipulierte Pixel bestimmt, wobei eine Bounding-Box alle Flanken eines Makroblocks aufweist.

**11.** Schaltung nach Anspruch 6, wobei die Verarbeitungsschaltkreisanordnung einen Windower (610) aufweist, mit einem ersten Modus, in dem Pixel in einem Dreieck innerhalb der Bounding-Box verarbeitet werden, und mit einem zweiten Modus, in dem alle Pixel innerhalb der Bounding-Box verarbeitet werden.

**Revendications**

**1.** Procédé de compensation de mouvement de données vidéo numériques incluant la réception d'une commande de compensation de mouvement ayant des données de correction connexes associées à un macrobloc, la réalisation d'opérations de prédiction d'image en réponse à la commande de compensation de mouvement, et l'association des données de correction aux résultats des opérations de prédiction d'image pour générer une image vidéo de sortie, le procédé étant **caractérisé par** :

le stockage des données de correction dans une mémoire (650) dans un premier ordre en réponse à la commande de compensation de mouvement ; et
la lecture (660) des données de correction dans la mémoire dans un second ordre.

**2.** Procédé selon la revendication 1, dans lequel le premier ordre est basé sur une sortie d'une opération de transformée en cosinus discrète inverse (en anglais « Inverse Discrete Cosine Transform » - IDCT).

**3.** Procédé selon la revendication 1, dans lequel la réalisation d'opérations de prédiction d'image comprend en outre :

la génération d'un cadre de contour contenant le macrobloc (605) ; et
l'itération du cadre de contour (610) ;
l'extraction de pixels de référence (620) ;
le filtrage des pixels de référence (625) ; et
l'ajout de données de correction aux pixels de référence (670).

**4.** Procédé selon la revendication 1, dans lequel les données de correction de mouvement incluent au moins un vecteur de mouvement.

**5.** Procédé selon la revendication 1, comprenant en outre la réalisation d'opérations de texturation pour le macrobloc.

**6.** Circuit pour générer une vidéo à compensation de mouvement ayant un dispositif de contrôle de trains de commandes (600) couplé pour recevoir une instruction pour manipuler les données vidéo à compensation de mouvement, un générateur d'adresses d'écriture (640) couplé au dispositif de contrôle de trains de commandes, des circuits de traitement couplés au générateur d'adresses d'écriture (640) pour recevoir les données et les informations de contrôle à partir du dispositif de contrôle de trains de commandes (600) pour générer une image vidéo reconstruite, le circuit étant **caractérisé par** :

une mémoire (650) couplée au dispositif de contrôle de trains de commandes (600) et au générateur d'adresses d'écriture (640), la mémoire (650) étant prévue pour stocker les données pixels dans un premier ordre déterminé par le générateur d'adresses d'écriture (640) ; et
un générateur d'adresses de lecture (660) couplé aux circuits de traitement et à la mémoire (650), le générateur d'adresses de lecture (660) poussant la mémoire (650) à sortir des données pixels dans un second ordre.

**7.** Circuit selon la revendication 6, dans lequel le premier ordre est un ordre majeur de rangée bloc par bloc.

**8.** Circuit selon la revendication 6, dans lequel le premier ordre correspond à une séquence de sortie d'une opération de transformée en cosinus discrète inverse.

**9.** Circuit selon la revendication 6, dans lequel le second ordre est un ordre majeur de rangée sous-bloc par sous-bloc.

**10.** Circuit selon la revendication 6, dans lequel les circuits de traitement comprennent un moteur d'établissement (605) qui détermine un cadre de contour pour les pixels manipulés par l'instruction, dans lequel le cadre de contour contient tous les bords d'un macrobloc.

**11.** Circuit selon la revendication 6, dans lequel les circuits de traitement comprennent un dispositif à fenêtre (en anglais « windower ») (610) ayant un premier mode dans lequel les pixels à l'intérieur d'un triangle dans un cadre de contour sont traités, et un second mode dans lequel tous les pixels à l'intérieur du cadre de contour sont traités.

**FIG. 1**

FIG. 2

| Time | 1 | 2 | 3 | 4 | 5 | 6 | 7 | 8 | 9 | 10 | 11 | 12 | 13 | 14 | 15 | 16 | 17 | 18 | 19 |
|------|---|---|---|---|---|---|---|---|---|----|----|----|----|----|----|----|----|----|----|
| Delivery Time | $I_1$ | $P_4$ | $B_2$ | $B_3$ | $P_7$ | $B_5$ | $B_6$ | $I_{10}$ | $B_8$ | $B_9$ | $P_{13}$ | $B_{11}$ | $B_{12}$ | $I_{14}$ | $P_{17}$ | $B_{15}$ | $B_{16}$ | | |
| Display Time | | $I_1$ | $B_2$ | $B_3$ | $P_4$ | $B_5$ | $B_6$ | $P_7$ | $B_8$ | $B_9$ | $I_{10}$ | $B_{11}$ | $B_{12}$ | $P_{13}$ | $I_{14}$ | $B_{15}$ | $B_{16}$ | $P_{17}$ | |

## FIG. 3

EP 1 147 671 B1

FIG. 4

Typically 720 pels wide

Luminance (Y)

Typically 480 pels high

Typically 360 pels wide

Chrominance (Cr)

Typically 240 pels high

Typically 360 pels wide

Chrominance (Cb)

Typically 240 pels high

FIG. 5

FIG. 6

EP 1 147 671 B1

| 712 | 714 | 722 | 724 |
|---|---|---|---|
| 0   1   2   3<br>16  17  18  19<br>32 . . . . . . . 35 | 4   5   6   7<br>20  21  22  23<br>36 . . . . . . . 39 | 8   9   10  11<br>24  25  26  27<br>40 . . . . . . . 43 | 12  13  14  15<br>28  29  30  31<br>44 . . . . . . . 47 |
|  | 48 . . . |  | 63 |

710       720

716    715    726    728

730       740

700

**FIG. 7**

**FIG. 8**

EP 1 147 671 B1